Europäisches Patentamt

European Patent Office

Office européen des brevets

(19)

(11) **EP 0 942 947 B1**

(12) **EUROPÄISCHE PATENTSCHRIFT**

(45) Veröffentlichungstag und Bekanntmachung des Hinweises auf die Patenterteilung:
**04.04.2001 Patentblatt 2001/14**

(51) Int Cl.7: **C08K 5/5399**, C08L 71/12
// (C08L71/12, 71:12, 25:02, 51:04)

(21) Anmeldenummer: **97951224.1**

(22) Anmeldetag: **18.11.1997**

(86) Internationale Anmeldenummer:
**PCT/EP97/06422**

(87) Internationale Veröffentlichungsnummer:
**WO 98/24838 (11.06.1998 Gazette 1998/23)**

(54) **FLAMMWIDRIGE THERMOPLASTISCHE FORMMASSEN AUF DER BASIS VON POLYARYLENETHERN**

FLAME-RESISTANT THERMOPLASTIC MOULDING COMPOUNDS BASED ON POLYARYLENE ETHERS

MELANGES A MOULER ININFLAMMABLES THERMOPLASTIQUES A BASE D'ETHERS DE POLYARYLENE

(84) Benannte Vertragsstaaten:
**BE DE ES FR GB IT NL**

(30) Priorität: **05.12.1996 DE 19650370**

(43) Veröffentlichungstag der Anmeldung:
**22.09.1999 Patentblatt 1999/38**

(73) Patentinhaber: **BASF AKTIENGESELLSCHAFT
67056 Ludwigshafen (DE)**

(72) Erfinder:
• **GOTTSCHALK, Axel
D-67435 Neustadt (DE)**
• **WEBER, Martin
D-67487 Maikammer (DE)**
• **KOCH, Andreas
D-67240 Bobenheim-Roxheim (DE)**
• **AUMÜLLER, Alexander
D-67435 Neustadt (DE)**

(56) Entgegenhaltungen:
**DE-A- 1 670 296          US-A- 3 322 860**

EP 0 942 947 B1

**Beschreibung**

Die Erfindung betrifft flammwidrige thermoplastische Formmassen auf der Basis von Polyarylenethern, enthaltend

A) 5 - 98 Gew.-% eines oder mehrerer Polyarylenether,

B) 2 - 50 Gew.-% Flammschutzmittel, enthaltend Iminophosphorane,

C) 0 - 93 Gew.-% vinylaromatische Polymerverbindungen,

D) 0 - 50 Gew.-% Schlägzähmodifier,

E) 0 - 60 Gew.-% an weiteren thermoplastischen Polymerisaten sowie

F) 0 - 60 Gew.-% an weiteren Zusätzen.

Weiterhin betrifft die Erfindung die Verwendung der genannten flammwidrigen thermoplastischen Formmassen zur Herstellung von Fasern, Folien und Formkörpern sowie die daraus erhältlichen Fasern, Folien und Formkörper.

Thermoplastische Formmassen werden aufgrund ihrer vorteilhaften physikalischen und chemischen Eigenschaften in mannigfaltiger Weise zu Formteilen mit einem breiten Anwendungsspektrum verarbeitet. Häufig können durch Mischen unterscniedlicher Polymerkomponenten Polymer-Blends erhalten werden, die leichter zu verarbeiten sind und optimierte Produkteigenschaften zeigen. Polymermischungen aus Polyphenylenethern (PPE) und Styrolpolymerisaten ergeben beispielsweise Formteile, die sich gegenüber schlagzähmodifizierten Styrolpolymerisaten (HIPS) durch eine bessere Wärmeformbeständigkeit auszeichnen. Derartige Polymermischungen sind z.B. bekannt aus den US-Patentschriften 3,383,435; 4,128,602 sowie 4,128,603. Eine ausführliche Beschreibung der Eigenschaften dieser Polymermischungen findet sich auch in L. Bottenbruch, "Technische Polymer-Blends", Kunststoffhandbuch 3/2, S. 63 ff., Hanser Verlag, München, 1993.

Für zahlreiche Anwendungen von Formkörpern aus thermoplastischen Formmassen wird mittlerweile gefordert, daß sie im Brandfall ein ausgeprägtes flammwidriges Verhalten zeigen. Ein wesentlicher Vorteil von Polymer-Blends auf der Basis von Polyphenylenethern und Styrolpolymerisaten besteht z.B. darin, daß durch Beimengung halogenfreier Zusätze, wobei insbesondere phosphorhaltige Verbindungen zu nennen sind, Formmassen erhalten werden, die flammwidrig sind und daher für viele Anwendungen im Bereich der Elektrotechnik einsetzbar werden.

Für den Einsatz auf dem Gebiet der Elektrotechnik ist insbesondere die Prüfung der Flammwidrigkeit nach UL 94 (z.B. beschrieben in J. TROITZSCH, "International Plastics Flammability Handbook", S. 346 ff., Hanser Verlag, München, 1990) ausschlaggebend.

Als Flammschutzmittel für Polyphenylenether/Polystyrol-Blends sind bislang vor allem Mischungen von Phosphinoxiden und Monophosphaten (DE-A 323 403 3), von Resorcinoldiphenylphosphat und Triphenylphosphat (JP-A 572 076 41) sowie Gemische bestehend aus Phosphaten, Melamin und rotem Phosphor (JP-A 050 253 41) eingesetzt worden. Des weiteren wird eine Kombination aus phosphorhaltigen Verbindungen mit Triazin-Derivaten und aromatischen Sulfonamiden in der EP 0 496 120 beschrieben. Weiterhin hat man versucht, durch den direkten Einbau von P- und N-haltigen Substituenten in die Polymerkette flammgeschützte Polymermassen zu erhalten (US-A 4,200,721).

Derartige flammgeschützte bzw. flammwidrige Polymerblends weisen jedoch trotz teilweise guter mechanischer Eigenschaften und guter Verarbeitbarkeit einen Schwachpunkt gerade bei dem charakteristischen Merkmal der Wärmeformbeständigkeit auf.

Der Erfindung lag demgemäß die Aufgabe zugrunde, flammwidrige thermoplastische Formmassen auf der Basis von Polyarylenethern bereit zu stellen, die durch den Zusatz einer wirksamen Menge an halogenfreiem Flammschutzmittel in ihren ursprünglichen physikalischen und chemischen Materialeigenschaften, insbesondere im Hinblick auf die Wärmeformbeständigkeit, nicht in unvorteilhafter Weise beeinflußt werden.

Demgemäß wurden die eingangs beschriebenen thermoplastischen Formmassen auf der Basis von Polyarylenethern gefunden.

Weiterhin wurde die Verwendung der erfindungsgemäßen Formmassen zur Herstellung von Formkörpern, Fasern und Folien sowie die hierbei erhältlichen Formkörper, Fasern und Folien gefunden.

Bevorzugt enthalten die erfindungsgemäßen flammwidrigen thermoplastischen Formmassen die

Komponente A) in einer Menge von 13,5 - 87 Gew.-%,
Komponente B) in einer Menge von 4 - 20 Gew.-%,
Komponente C) in einer Menge von 8,5 - 82 Gew.-%,

Komponente D) in einer Menge von 0,5 - 30 Gew.-%,
Komponente E) in einer Menge von 0 - 50 Gew.-% und die
Komponente F) in einer Menge von 0 - 50 Gew.-%.

Die Summe der Gew.-% der einzelnen Komponenten beträgt 100.

Unter Polyarylenethern (Komponente A) sind bevorzugt sowohl Polyarylenether an sich als auch Polyarylenethersulfide, Polyarylenethersulfone oder Polyarylenetherketone zu verstehen. Deren Arylengruppen können gleich oder verschieden sein und unabhängig voneinander einen aromatischen Rest mit 6 bis 18 C-Atomen bedeuten. Beispiele geeigneter Arylenreste sind Phenylen, Bisphenylen, Terphenylen, 1,5-Naphthylen, 1,6-Naphthylen, 1,5-Anthrylen und 9,10-Anthrylen in substituierter und unsubstituierter Form. Darunter sind 1,4-Phenylen und 4,4'-Biphenylen bevorzugt. Insbesondere wird als Komponente A) wenigstens ein an sich bekannter Polyphenylenether (PPE) verwendet. Hierbei handelt es sich vorzugsweise um Verbindungen auf Basis von substituierten, insbesondere disubstituierten Polyphenylenethern, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenether verwendet. Als Beispiele für Substituenten sind Halogenatome, wie Chlor oder Brom, und Alkylreste mit 1 bis 4 Kohlenstoffatomen, die vorzugsweise kein α-ständiges tertiäres Wasserstoffatom aufweisen, z.B. Methyl- Ethyl-, Propyl- oder Butylreste, zu nennen. Die Alkylreste können wiederum durch Halogenatome, wie Chlor oder Brom, oder durch eine Hydroxylgruppe substituiert sein. Weitere Beispiele möglicher Substituenten sind Alkoxyreste, vorzugsweise mit bis zu 4 Kohlenstoffatomen, wie Methoxy, Ethoxy, n-Propoxy und n-Butoxy, oder gegebenenfalls durch Halogenatome und/oder Alkylgruppen substituierte Phenylreste. Ebenfalls geeignet sind Copolymere verschiedener Phenole, wie Copolymere von 2,6-Dimethylphenol und 2,3,6-Trimethylphenol. Selbstverständlich können auch Gemische verschiedener Polyphenylenether eingesetzt werden. Die Polyphenylenether A) sind in den erfindungsgemäßen Formmassen in einer Menge von 5 bis 98, bevorzugt 13,5 bis 87 Gew.-% enthalten.

Beispiele für Polyphenylenether sind Poly(2,6-dilauryl-1,4-phenylenether), Poly(2,6-diphenyl-1,4-phenylenether), Poly(2,6-dimethoxy-1,4-phenylenether), Poly (2,6-diethoxy-1,4-phenylenether), Poly (2-methoxy-6-ethoxy-1,4-phenylenether), Poly(2-ethyl-6-stearyloxy-1,4-phenylenether), Poly-(2,6-dichlor-1,4-phenylenether), Poly(2-methyl-6-phenyl-1,4-phenylenether), Poly(2,6-dibenzyl-1,4-phenylenether), Poly(2-ethoxy-1,4-phenylenether), Poly (2-chlor-1,4-phenylenether), Poly(2,5-dibrom-1,4-phenylenether). Bevorzugt werden Polyphenylenether eingesetzt, bei denen die Substituenten Alkylreste mit 1 bis 4 Kohlenstoffatomen sind, wie Poly(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether und Poly (3-ethyl-6-propyl-1,4-phenylenether). Als besonders geeignet hat sich Poly(2,6-dimethyl-1,4-phenylenether) erwiesen.

Polyarylenether A) sind an sich bekannt oder können nach an sich bekannten Methoden hergestellt werden. Polyarylenethersulfone oder -ketone entstehen z.B. durch Kondensation aromatischer Bishalogenverbindungen und den Alkalidoppelsalzen aromatischer Bisphenole. Sie können auch durch Selbstkondensation von Alkalisalzen aromatischer Halogenphenole in Gegenwart eines Katalysators hergestellt werden. Bevorzugte Verfahrensbedingungen zur Synthese von Polyarylenethersulfonen und -ketonen sind beispielsweise in der EP-A 113 112 und EP-A 135 130 beschrieben.

Die in Frage kommenden Polyphenylenether werden vorzugsweise durch oxidative Kupplung von in o-Position disubstituierten Phenolen hergestellt, wie beschrieben in den US-Patentschriften 3,661,848; 3,378,505; 3,306,875 und 3,639,656. Es können auch funktionalisierte oder modifizierte Polyphenylenether eingesetzt werden, wie sie z.B. aus WO-A 86/02086, WO-A 87/00540, EP-A-222 246, EP-A-223 116 und EP-A-254 048 bekannt sind. Üblicherweise wird bei deren Herstellung ein Polyphenylenether durch Einbau mindestens einer Carbonyl-, Carbonsäure-, Säureanhydrid-, Saureamid-, Säureimid, Carbonsäureester-, Carboxylat-, Amino-, Hydroxyl-, Epoxi-, Oxazolin-, Urethan-, Harnstoff-, Lactam- oder Halogenbenzylgruppe modifiziert, so daß z. B. eine bessere Verträglichkeit mit einem Polyamid erreicht wird. Die Modifizierung wird im allgemeinen durch Umsetzung eines Polyphenylenethers mit einem Modifiziermittel, das mindestens eine der oben genannten Gruppen enthält, in Lösung (WO-A 86/2086), in wäßriger Dispersion, in einem Gasphasenverfahren (EP-A-25 200) oder in der Schmelze gegebenenfalls in Gegenwart von geeigneten vinylaromatischen Polymeren oder Schlagzähmodifiern durchgeführt, wobei wahlweise Radikalstarter zugegen sein können.

Geeignete Modifiziermittel sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von $C_1$- und $C_2$-$C_8$-Alkanolen, die Mono- oder Diamide dieser Säuren wie N-Phenylmaleinimid und Maleinhydrazid. Andere geeignete Modifizierungsmittel sind das Säurechlorid des Trimelithsäureanhydrids, Benzol-1,2-dicarbonsäureanhydrid-4-carbonsäure-essigsäureanhydrid, Chlorethanoylsuccinaldehyd, Chlorformylsuccinaldehyd, Zitronensäure und Hydroxysuccinsäure.

Hinsichtlich der physikalischen Eigenschaften der Polyphenylenether können bevorzugt solche eingesetzt werden, die ein mittleres Molekulargewicht $M_w$ (Gewichtsmittel) von 8000 bis 70000, vorzugsweise 12000 bis 60000

3

und insbesondere 25000 bis 50000, aufweisen. Dies entspricht einer Grenzviskosität von etwa 0,18 bis 0,7, vorzugsweise von 0,25 bis 0,62 und insbesondere von 0,39 bis 0,55 dl/g, gemessen in Chloroform bei 25°C.

Die Bestimmung der Molekulargewichtsverteilung erfolgt im allgemeinen mittels Gelpermeationschromatographie (Shodex-Trennsäule 0,8 x 50 cm des Typs A 803, A 804 und A 805 mit Tetrahydrofuran (THF) als Elutionsmittel bei Raumtemperatur). Die Lösung der PPE-Proben in THF erfolgt unter Druck bei 110°C, wobei 0,16 ml einer 0,25 gew.-%igen Lösung injiziert werden. Die Detektion erfolgt im allgemeinen mit einem UV-Detektor. Die Eichung der Säulen wurde mit PPE-Proben durchgeführt, deren absolute Molekulargewichtsverteilungen durch eine GPC-Laser-Lichtstreuungskombination bestimmt wurden.

Als Flammschutzmittel (Komponente B) werden solche eingesetzt, die ausschließlich oder im wesentlichen Iminophosphorane ($\lambda^5$-Phosphazene) enthalten. Diese liegen in den thermoplastischen Polymerformmassen in einer Menge von 2 bis 50 Gew.-%, bevorzugt in einer Menge von 4 bis 20 Gew.-% vor. Besonders geeignet für die vorliegend beschriebenen Formmassen sind Flammschutzmittel, die ausschließlich Iminophosphorane enthalten. Grundsätzlich kommen Iminophosphorane in Frage, die unter die allgemeinen Formeln

$$X\text{-}Z \qquad (I) \qquad und \qquad Y\text{-}(Z)_n \qquad (II)$$

fallen, worin

X   Wasserstoff; ein geradkettiger oder verzweigter $C_1$- bis $C_{20}$-, bevorzugt $C_3$- bis $C_{12}$-Alkylrest, wie Propyl, Butyl, Pentyl in geradkettiger und verzweigten Form; Aryl, bevorzugt nicht substituierte oder aromatisch-aliphatisch substituierte $C_6$-bis $C_{20}$-Aryle, insbesondere Phenyl; Heteroaryl; eine aliphatische oder aromatische Sulfonsäuregruppe; eine Cyangruppe; Trialkylsilyl; eine $P(O)R_2$- oder $P(S)R_2$-Gruppe oder eine Amingruppe bedeutet,

Y   einen n-wertigen organischen Rest, der $C_1$- bis $C_{100}$-, bevorzugt $C_2$- bis $C_{20}$- geradkettige oder verzweigte Alkyleneinheiten, Dendrimere, aliphatische Carbocyclen, wobei die Ringe aus 3 bis 20 Kohlenstoffatomen bestehen und ggf. alkylsubstituierte aromatische Zwischenglieder enthalten können, umfaßt, wobei die offenkettigen und cyclischen Alkyleneinheiten im Alkylteil einmal oder mehrmals, in beliebiger Kombination, mit Stickstoff-, C(O)-R-, Ether-, Thioether-, $SO_2$-Resten, aliphatischen - oder aromatischen Heterocyclen oder einer Cyan- oder Isocyanatgruppe substituiert sein können; Aryl; Heteroaryl, bevorzugt Heteroaromaten mit 2,6-Disubstitution, die sich z.B. vom Pyridin, 4-Phenyl- und 4-Methyl-1,3,5-triazin ableiten; eine aromatische Mono- oder Polysulfonsäuregruppe; Amidderivate der Phosphorig-, Phosphor- oder Thiophosphorsäure; Amidderivate der Monoalkylund Monoarylphosphonsäure, der Monoalkyl- und Monoarylthiophosphonsäure sowie gemischt-substituierte Verbindungen darstellt;

Z   einen Rest der Formel $R^1R^2R^3P=N$- darstellt, wobei $R^1$, $R^2$ und $R^3$, unabhängig voneinander, $C_1$- bis $C_{20}$-Alkyl, bevorzugt $C_4$-bis $C_9$-Alkyl, insbesondere Butyl und Cyclohexyl; $C_6$- bis $C_{20}$-Aryl, bevorzugt alkylsubstituiertes Aryl, insbesondere Phenyl, Phenyl mit einer Methylgruppe in 2-, 3- oder 4-Position, Phenyl mit zwei Methylgruppen in 2,6-, 2,5-, 2,4-, 2,3-, 3,5- und 3,4-Position, oder Heteroaryl darstellt und

n   ganze Zahlen zwischen 2 und 1000, bevorzugt zwischen 2 und 10 bezeichnet.

Iminophosphorane der Formel (I) und (II) können jeweils einzeln oder in Kombination den Bestandteil B) der erfindungsgemäßen thermoplastischen Formmassen bilden, wobei in letzterem Fall die Bestandteile Z von (I) und (II) nicht übereinstimmen müssen. Grundsätzlich können jeweils Gemische der unter die jeweilige Formel fallenden Verbindungen eingesetzt werden.

Unter Aryl fallen ganz allgemein $C_6$- bis $C_{20}$-Arylverbindungen, wie Phenyl und Naphthyl; Alkylarylverbindungen, wie $C_1$- bis $C_6$-alkyl-substituiertes Phenyl, wobei als Substituenten Methyl, Ethyl, 1,2,3,4-Tetrahydronaphthalin in Frage kommen; mit aromatischen Resten substituiertes Aryl, z.B. Biphenyl; gemischt aromatisch-aliphatisch substituiertes Aryl, wie alkylsubstituiertes Biphenyl; mit stickstoffhaltigen Gruppen substituiertes Aryl, 5 wobei als stickstoffhaltige Gruppen z.B. primäre und sekundäre Amine mit $C_1$- bis $C_{12}$-Alkyl- oder Phenylresten, die Nitro- und Hydroxylamingruppe sowie Hydroxylaminether mit $C_1$- bis $C_{12}$-Alkyl-oder Phenylresten in Frage kommen; mit C(O)-R-Substituenten versehenes Aryl, worin R = Wasserstoff, $C_1$ bis $C_{12}$-Alkyl, $C_6$- bis $C_{20}$-Aryl, Hydroxyl, O-$C_1$- bis -$C_{12}$-Alkyl, O-Aryl oder primäres, sekundäres oder tertiäres Amin, ggf. mit den vorgenannten N-Substituenten, bedeuten; mit Ether- oder Thioethergruppen substituiertes Aryl mit O-$C_1$- bis -$C_{12}$-Alkyl- oder O-Aryl- sowie mit S-$C_1$- bis -$C_{12}$-Alkyl- oder S-Arylresten; mit einer $SO_2$-Gruppe substituiertes Aryl, wobei als ein am Schwefel gebundener Rest eine Hydroxylgruppe, ein primäres, sekundäres, tertiäres Amin, vorzugsweise mit N-Substituenten wie vorhergehend beschrieben, eine Hydrazingruppe mit einem $C_1$- bis $C_{12}$-Alkyl- oder Phenylrest, wobei ein derartiger Rest an $N^1$ oder $N^2$ oder an

$N^1$ und $N^2$ oder zweimal an $N^2$ oder einmal an $N^1$ und zweimal an $N^2$ gebunden ist, eine OM-Gruppe, wobei M ein ein- oder zweiwertiges Metall aus der Gruppe der Alkali- oder Erdalkalimetalle oder Eisen, Kobalt, Nickel, Kupfer, Zink oder Titan darstellt, ein $O$-$C_1$- bis -$C_{12}$-Alkylrest, ein O-Arylrest, eine Isocyanatgruppe oder ein 1,2,4-Triazolrest vorliegen kann; mit einem aliphatischen Heterocyclus substituiertes Aryl; mit einem aromatischen Heterocyclus substituiertes Aryl sowie mit einer Cyan- oder mit einer Isocyanatgruppe substituiertes Aryl. Die vorstehend aufgeführten Substituenten am aromatischen System können sowohl einzeln, als auch mehrfach in beliebiger Kombination vorliegen.

Als Heteroarylreste sind ganz allgemein geeignet $C_3$- bis $C_{20}$-Verbindungen, die vorzugsweise 1 bis 3 Stickstoffatome pro Ring enthalten, z.B. Pyridyl, Pyrimidyl, Pyrazinyl, Triazinyl, Chinoxalinyl; alkylsubstituierte Heteroaryl-verbindungen, wie $C_1$- bis $C_6$-alkylsubstituiertes Pyridyl, Pyrimidyl, Pyrazinyl, Triazinyl, Chinoxalinyl, wobei die Alkylsubstituenten Methyl, Ethyl, Propyl, Butyl, Pentyl und Cyclohexyl sein können und Mehrfachsubstitution nicht ausgeschlossen ist; mit aromatischen Resten versehenes Heteroaryl, wie Phenyltriazinyl; gemischt aromatisch-aliphatisch substituiertes Heteroaryl, wobei bevorzugt ein Phenylrest mit einer Methylgruppe in 2-,3- oder 4-Position oder ein Phenylrest mit zwei Methylgruppen in 2,6-, 2,5-, 2,4-, 2,3-, 3,5- oder 3,4-Position eingesetzt wird; mit stickstoffhaltigen Gruppen versehenes Heteroaryl; mit C(O)-R-Gruppen substituiertes Heteroaryl; mit Ether- oder Thioethersubstituenten versehenes Heteroaryl; mit einer $SO_2$-Gruppe substituiertes Heteroaryl; mit einem aliphatischen Heterocyclus substituiertes Heteroaryl; mit einem aromatischen Heterocyclus substituiertes Heteroaryl sowie mit einer Cyan- oder mit einer Isocyanatgruppe substituiertes Heteroaryl. Soweit die für den Heteroarylrest in Frage kommenden Substituentenklassen bereits als Arylsubstituenten beschrieben sind, können die dort aufgelisteten Substitutionsmöglichkeiten übernommen werden. Die vorstehend aufgeführten Substituenten am heteroaromatischen Ring können nicht nur einzeln, sondern ebensogut mehrfach und vor allem in beliebiger Kombination vorliegen.

Als aliphatische Sulfonsäuregruppen können über den Schwefel an den Rest Z gebundene Substituenten eingesetzt werden, wobei der aliphatische Rest bevorzugt verzweigtes oder geradkettiges $C_1$- bis $C_{20}$-Alkyl ist, bspw. Methyl.

Als aromatische Sulfonsäuregruppen kommen z.B. über den Schwefel an den Rest Z gebundene Substituenten in Betracht, wobei für den aromatischen Rest die oben für Aryl aufgeführten Substitutionsmöglichkeiten in Frage kommen.

Als Trialkylsilylrest ist z.B. die Trimethylsilylgruppe geeignet.

In der $P(O)R_2$- und $P(S)R_2$-Gruppe umfaßt R $C_1$- bis $C_{12}$-Alkyl, Aryl, $O$-$C_1$- bis -$C_{12}$-Alkyl, O-Aryl, $S$-$C_1$- bis -$C_{12}$-Alkyl und S-Aryl.

Als Aminreste sind geeignet mit $C_1$ - bis $C_{12}$-Alkyl oder Phenyl substituierte sekundäre oder tertiäre Amine sowie Hydrazinderivate.

Soweit die unter Y genannten Substituentenklassen bereits vorhergehend beschrieben sind, gelten die dort aufgeführten Substitutionsmöglichkeiten gleichfalls für unter die Formel (II) fallende Iminophosphorane.

Als Amidderivate der Phosphorigsäure-, Phosphorsaure- und Thiophosphorsäure werden vorzugsweise die jeweiligen Triamide (n = 3) -$P(O)Z_3$, $P(S)Z_3$ bzw. $PZ_3$ - eingesetzt, wobei die Z-Reste eines Triamids oder Diamids identisch oder verschieden sein können.

Die Amidderivate der Monoalkyl- und Monoarylphosphonsäure sowie der Monoalkyl- und Monoarylthiophosphonsäure (n = 2) umfassen Verbindungen der Formel $R^4P(O)Z_2$ bzw. $R^4P(S)Z_2$, wobei $R^4$ $C_1$- bis $C_{12}$-Alkyl bzw. Aryl, mit Aryl wie vorhergehend beschrieben, ist und die Z-Reste eines Diamids identisch oder verschieden sein können.

Als gemischt substituierte Verbindungen Y sind z.B. substituierte aromatische Sulfonsäuren ($H_2N$-Ar-$SO_2$-$NH_2$), sulfonierte Heterocyclen, zwei- oder mehrkernige Heterocyclen mit Aminosubstitution im nicht heterocyclischen Ring geeignet.

In der allgemeinen Formel (II) kann Z, für $n \neq 1$, identische oder verschiedene Substituenten bezeichnen.

Als Flammschutzmittel B) sind außerdem von Carbonsäureamiden abgeleitete Iminophosphorane der allgemeinen Formel (III)

$$\left( Z - C(O) \right)_m R^5 \qquad\qquad (III)$$

geeignet, wobei Z über den Iminostickstoff an die Carbonylgruppe gebunden ist und unter Z die bereits vorhergehend beschriebenen Reste fallen und $R^5$ mit Ausnahme des Wasserstoffs der Definition von Y entspricht. m kann ganzzahlige Werte zwischen 1 und 20 annehmen.

Als Flammschutzmittel B) kommen weiterhin Gemische, die im wesentlichen die beschriebenen Iminophosphorane und daneben an sich bekannte. Flammschutz- oder Antitropfmittel enthalten, in Frage. Deren Anteil liegt im allgemeinen, bezogen auf B), im Bereich von 1 bis 40, bevorzugt im Bereich von 2 bis 25 und insbesondere im Bereich von 3 bis 15 Gew.-%. Unter bekannte Flammschutzmittel fallen zum Beispiel die in der Einleitung als Stand der Technik beschriebenen Systeme sowie Mischungen derselben, darüber hinaus auch die in der deutschen Patentanmeldung 196 326 75.3 offenbarten Phosphorverbindungen. Des weiteren kommen anorganische Flammschutzmittel auf der Basis von Hydroxiden oder Carbonaten, insbesondere des Magnesiums, anorganische und organische Borverbindungen, wie Borsäure, Natriumborat, Boroxid, Natriumtetraphenylborat und Tribenzylborat sowie stickstoffhaltige Flammschutzmittel, wie Melamincyanurat und Ammoniumpolyphosphat in Frage. Grundsätzlich sind die beschriebenen Iminophosphorane auch im Gemisch mit halogenhaltigen Flammschutz- oder Antitropfmitteln in den beschriebenen Kunststofformmassen einsetzbar. So kann z.B. Teflon, dessen Wirkung als Antitropfmittel u.a. aus der US-Patentschrift 4,107,232 bekannt ist, neben Iminophosphoranen verwendet werden.

Für die Herstellung von Iminophosphoranen kann auf eine Vielzahl etablierter Synthesemöglichkeiten zurückgegriffen werden. Neben der Staudinger-Methode - der Reaktion von Triphenylphosphin mit einem Azid (Y.G. Gololobov et al., Tetrahedron 1981, 37, S. 437) - werden Iminophosphorane ausgehend von Aminen (T.W. Rave et al., J.Org. Chem. 1966, 31, S. 2894), Amiden (unter Verwendung von Diethylazodicarboxylat zur Aktivierung und Kopplung mit Triphenylphosphin; s. S. Bittner, J.Org.Chem. 1985, 50 S. 1712) und Isoxazolen (z.B. bei T.L. Lemke et al., J. Heterocycl. Chem. 1983, 20, S. 899) synthetisiert. Für $\alpha$-Aminoheteroaromaten ist die direkte Kopplung mit Triphenylphosphin möglich, wenn man zur Aktivierung beispielsweise Tetrachlormethan (J. Bödeker, P. Köckritz, J. prakt. Chem. 1978, 320, 1043-1046) oder Hexachlorethan (T. Okawa, S. Eguchi, Synlett 1994, 555-556) einsetzt. Unter Verwendung von Phosphordihalogeniden, wie Triphenylphosphindibromid oder Triphenylphosphindichlorid, können, ggf. in Gegenwart von Hilfsbasen, ebenfalls Iminophosphorane hergestellt werden (vgl. Molina et al. Heterocycles 1994, 37, 997-1018). Die Synthese von Iminophosphoranen aus primären Aminen unter Verwendung von trisubstituiertem Phosphin sowie Chlor oder Brom ist in DE-A 167 02 96 beschrieben. Ein weiterer Zugang wurde von Katritzky et al. durch Basenbehandlung von 1-[$\alpha$-(Phosphoranylidenamino)alkyl]benzotriazolen geschaffen (J.Org.Chem. 1994, 59, S. 2740).

Iminophosphorane sind üblicherweise sehr reaktionsfreudig und reagieren deshalb mit den meisten Reaktionspartnern bereits unter sehr milden Bedingungen, was u.a. auch die Empfindlichkeit gegen Feuchtigkeit erklärt. Die hier aufgeführten Iminophosphorane zeichnen sich demgegenüber, mit Ausnahme von Verbindungen der allgemeinen Formel (III), dadurch aus, daß sie weder gegen Feuchtigkeit oder wäßrige Medien noch gegen Hitze empfindlich sind. Vielmehr ist es möglich, die genannten Iminophosphorane unter relativ großer thermischer Belastung in die polymeren Formmassen einzuarbeiten.

Als Komponente C) werden vinylaromatische Polymerverbindungen eingesetzt. Bevorzugt sind dies schlagzähmodifizierte Styrolpolymerisate, die mit der Komponente A) verträglich sind. Die Komponente C) ist in den erfindungsgemäßen Formmassen in Mengen von 0 bis 93, bevorzugt 8,5 bis 82 Gew.-% enthalten.

Beispiele für bevorzugte, mit Polyphenylenethern verträgliche Styrolpolymerisate sind der Monographie von O. Olabisi, Polymer-Polymer Miscibility, 1979, S. 224 bis 230 und 245 zu entnehmen.

Als Homopolymerisate kommen neben Polystyrol auch die Polymerisate von Styrolhomologen wie p-Methylstyrol, $\alpha$-Methylstyrol oder Divinylbenzol in syndio-, iso- oder ataktischer Form, entweder allein oder in Form einer beliebigen Mischung, in Betracht.

Die Homopolymerisate werden im allgemeinen nach den bekannten Verfahren in Masse, Lösung oder Suspension hergestellt (vgl. Ullmanns Enzyklopädie der techn. Chemie, Band 19, Seiten 265 bis 272, Verlag Chemie, Weinheim 1980; H. Gausepohl, R. Gellert, "Polystyrol", Kunststoffhandbuch 4, S. 37 - 144, Hanser Verlag, München, 1996). Die Homopolymerisate können Gewichtsmittel des Molekulargewichts $M_w$ von 3000 bis 300000 aufweisen, die nach üblichen Methoden bestimmt werden können. Geeignetes Standard-Polystyrol wird nach dem Verfahren der anionischen bzw. radikalischen Polymerisation hergestellt.

Als Comonomere zur Herstellung von Copolymerisaten des Styrols kommen z.B. (Meth)acrylsäure, (Meth)acrylsäurealkylester mit 1 bis 4 C-Atomen im Alkylrest, Cyclohexylmethacrylat, Isobornylmethacrylat, Acrylnitril, Methacrylnitril und Maleinsäureanhydrid sowie Maleinsäureimide, Acrylamid und Methacrylamide sowie deren N,N- oder N-alkylsubstituierten Derivate mit 1 bis 10 C-Atomen im Alkylrest in Frage. Beispiele für $C_{1-10}$-Alkylreste umfassen $C_{1-4}$-Alkylreste obiger Definition sowie n-Pentyl, n-Hexyl, n-Heptyl, n-Octyl, n-Nonyl, n-Decyl und deren verzweigte Analoga.

Die Comonomeren sind je nach ihrer chemischen Struktur in unterschiedlichen Mengen in den Styrolpolymerisaten enthalten. Entscheidend für den Gehalt an Comonomeren im Mischpolymerisat ist die Mischbarkeit des Copolymerisates mit dem Polyphenylenether. Solche Mischungsgrenzen sind bekannt und beispielsweise in der US-A 4,360,618 und US-A 4,405,753 sowie in der Veröffentlichung von J.R. Fried, G.A. Hanna, Polymer Eng. Sci., Band 22 (1982), Seite 705 ff. beschrieben.

Beispiele für geeignete Copolymerisate sind Styrol-Acrylnitril-Copolymere, $\alpha$-Methylstyrol-Acrylnitril-Copolymere, Styrol-Maleinsäureanhydrid-Copolymere, Styrol-Phenylmaleinimid-Copolymere, Styrol-Methylmethacrylat-Copolymere, Styrol-Methylmethacrylat-Acrylnitril-Copolymere, Styrol-Acrylnitril-Maleinsäureanhydrid-Copolymere, Styrol-Acrylnitril-Phenylmaleinimid-Copolymere, $\alpha$-Methylstyrol-Acrylnitril-Methylmethacrylat-Copolymere, $\alpha$-Methylstyrol-Acrylnitril-t-Butylmethacrylat-Copolymere, Styrol-Acrylnitril-t-Butylmethacrylat-Copolymere.

Die Herstellung der Copolymeren erfolgt nach bekannten Verfahren, die beispielsweise in Ullmanns Enzyklopädie der techn. Chemie, Band 19, Seite 273 ff, Verlag Chemie, Weinheim (1980) beschrieben sind. Die Copolymerisate haben im allgemeinen Gewichtsmittel des Molekulargewichts ($M_w$) von 10000 bis 300000, die nach üblichen Methoden bestimmt werden können.

Als schlagzähmodifizierte Styrolpolymerisate eignen sich Homound Copolymerisate von vinylaromatischen Monomeren mit 8 bis 12 C-Atomen, welche in Gegenwart eines Kautschuks hergestellt werden. Der Kautschukgehalt beträgt 5 bis 25 Gew.-%, vorzugsweise etwa 8 bis 17 Gew.-%. Eine Beschreibung der Struktur, Eigenschaften und Herstellung schlagzähmodifizierter Polystyrole findet sich in der Übersichtsliteratur (A. Echte, F. Haaf, J. Hambrecht in Angew. Chem. (Int. Ed. Engl.) 20, 344-361, (1981); sowie Kunststoffhandbuch, Band 4 Polystyrol, Carl Hanser Verlag, München, 1968).

Geeignete schlagzähmodifizierte Polystyrole sind größtenteils im Handel erhältlich und weisen eine Viskositätszahl (VZ) der Hartmatrix von etwa 50 bis 130 ml/g (0,5 %ig in Toluol bei 23°C) auf, vorzugsweise von 60 bis 90 ml/g, besonders bevorzugt von 80 ml/g.

Bevorzugt werden Standard-Polystyrol und schlagzähes Polystyrol, deren toluollöslicher Anteil ein mittleres Molekulargewicht $M_w$ von 50000 bis 500000 g/mol aufweist und die gegebenenfalls noch mit Additiven, wie beispielsweise Mineralöl, Stabilisator, Antistatika, Flammschutzmittel oder Wachsen ausgerüstet sind.

Als monovinylaromatische Verbindungen für schlagzähmodifizierte Styrolpolymerisate kommen dabei insbesondere Styrol und die kernoder seitenkettensubstituierten Styrole in Betracht. Bevorzugte Substituenten sind dabei Halogenatome, wie insbesondere Chlor und Brom; Hydroxyl; und $C_{1-4}$-Alkyl, wie Methyl, Ethyl, n-Propyl, i-Propyl, n-Butyl und t-Butyl. Als Beispiele für diese Verbindungen seien Chlorstyrol, α-Methylstyrol, Styrol, p-Methylstyrol, Vinyltoluol und p-t-Butylstyrol genannt. Vorzugsweise wird jedoch Styrol allein verwendet.

Darüber hinaus können die verwendeten schlagzähen Polystyrole durch die Verwendung spezieller Polybutadien-Kautschuke z.B. mit gegenüber herkömmlichen Kautschuken verändertem 1,4-cis-bzw. 1,4-trans-Anteil oder 1,2- und 1,4-Verknüpfungsanteil strukturell verändert sein. Bevorzugt sind solche schlagzähen Polystyrole mit einem Polybutadienanteil von 9 - 11 Gew.-%. Besonders bevorzugt ist dabei schlagfestes Polystyrol mit Zellteilchenmorphologie. Die mittlere Teilchengröße der Weichkomponente sollte im Bereich von 1,9 - 3,5 μm liegen. Ferner können anstelle von Polybutadienkautschuk auch andere Dienkautschuke sowie Elastomere von der Art des Ethylen-Propylen-Dien-Copolymer (EPDM-Kautschuk) sowie hydrierte Dienkautschuke eingesetzt werden.

Die meist angewandten Verfahren zur Herstellung schlagzähmodifizierter Styrolpolymerisate sind die Polymerisation in Masse oder Lösung in Gegenwart eines Kautschuks, wie es beispielsweise in der US-Patentschrift 2,694,692 beschrieben ist, und Verfahren zur Massesuspensionspolymersisation, wie sie beispielsweise in der US-Patentschrift 2,862,906 beschrieben sind. Selbstverständlich 5 sind auch andere Verfahren anwendbar, sofern die gewünschte Teilchengröße der Kautschukphase eingestellt wird. Die beschriebenen vinylaromatischen Polymerverbindungen können natürlich auch als Mischungen eingesetzt werden.

Als Komponente D) können die üblicherweise für die Schlagzähmodifizierung von Styrolpolymerisaten gebräuchlichen, natürlichen oder synthetischen Kautschuke eingesetzt werden. Es werden bis zu 50 Gew.-%, vorzugsweise bis zu 30 Gew.-% schlagzähmodifizierende Kautschuke verwendet. Bevorzugt ist D) in einer Menge von 0,5 bis 30 Gew.-% in den erfindungsgemäßen thermoplastischen Formmassen enthalten. Geeignete Kautschuke im Sinne der Erfindung sind neben Naturkautschuk z.B. Polybutadien, Polyisopren und Mischpolymerisate des Butadiens und/oder Isoprens mit Styrol und anderen Comonomeren, die eine Glasübergangstemperatur, bestimmt nach K.H. Illers und H. Breuer, Kolloidzeitschrift 190 (1), S. 16 - 34 (1963), kleiner -20°C besitzen.

Geeignet sind demgemäß übliche Kautschuke, wie Acrylatkautschuk, Epichlorhydrin-Kautschuk, Ethylen-Vinylacetat-Kautschuk, Polyethylenchlorsulfonkautschuk, Siliconkautschuk, Polyetherkautschuk und Polymerisate konjugierter Diene, wie Polybutadienkautschuk und Polyisoprenkautschuk. Die Dienpolymerisate konnen, in an sich bekannter Weise, teilweise oder vollstandig hydriert sein. Außerdem kommen z.B. in Betracht: Acrylnitrilbutadienkautschuk, hydrierter Styrolbutadienkautschuk, Ethylen-Propylen-Dien-Kautschuk, Polybutylen- und Polyoctenamerkautschuke, Ionomere, Blockcopolymere aus vinylaromatischen Monomeren mit Dienen wie Butadien oder Isopren (an sich bekannt aus EP-A 62 282) mit dem Aufbau M1M2-, M1M2M1M2-, M1M2M1- oder M1M2M1'-, wobei diese Blockpolymerisate auch Segmente mit statistischer Verteilung enthalten können, sowie Stern-Block-Copolymere. Als besonders geeignet haben sich Polymerisate konjugierter Diene wie Polybut adienkautschuk oder Polyisoprenkautschuk erwiesen. Derartige synthetische Kautschuke sind dem Fachmann geläufig und zusammenfassend in "Ullmanns Enzyklopädie der Technischen Chemie", 4. Auflage, Bd. 13, S. 595 bis 634, Verlag Chemie GmbH, Weinheim 1977, beschrieben.

Dien-Kautschuke sind beispielsweise Homopolymerisate von konjugierten Dienen mit 4 bis 8 Kohlenstoffatomen wie Butadien, Isopren, Piperylen und Chloropren, Copolymerisate solcher Diene untereinander und Copolymerisate solcher Diene mit Styrol-, Acryl- oder Methacrylverbindungen (z.B. Acrylnitril, Methacrylnitril, Acrylsäure, Methacrylsäure, Acrylsäurebutylester, Acrylsäureethylhexylester und Methylmethacrylat). Besonders bevorzugte Dien-Kautschuke sind handelsübliche Butadien-, Butadien-Styrol-, Butadien-Methylmethacrylat-, Butadien-Acrylsäurebutylester- und Butadien-Acrylnitril-Kautschuke (z.B. Cariflex® der Shell; Finaprene® der Fina; Tufprene® der Asahi;

Exxellor® der Exxon; Europrene® der Enichem). Insbesondere werden Styrol-Butadien-Styrol und Styrol-Ethylen/Butylen-Styrol Blockpolymere eingesetzt, bei denen die olefinischen Segmente vorteilhafterweise gesättigt vorliegen (z. B. Kraton®G 1650 der Shell; die vorstehenden Firmenbezeichnungen sind abgekürzt).

Bei den Acrylatkautschuken handelt es sich i.a. um Alkylacrylat-Kautschuke aus einem oder mehreren $C_4$-$C_8$- Alkylacrylaten, wobei bevorzugt mindestens teilweise Butyl-, Hexyl-, Octyl- oder 2-Ethylhexylacrylat verwendet worden sind. Diese Alkylacrylat-Kautschuke können bis zu 30 Gew.-% harte Polymere bildende Monomere wie Vinylacetat, (Meth)acrylnitril, Styrol, substituiertes Styrol, Methylmethacrylat, Vinylether einpolymerisiert enthalten. Die Acrylatkautschuke enthalten weiterhin bis zu 10 Gew.-%, vorzugsweise 1 bis 5 Gew.-% an vernetzend wirkenden, polyfunktionellen Monomeren (Vernetzungsmonomere). Beispiele hierfür sind Monomere, die zwei oder mehr zur Copolymerisation befähigte Doppelbindungen enthalten.

Geeignete Siliconkautschuke können z.B. vernetzte Siliconkautschuke aus Einheiten der allgemeinen Formeln $R_2SiO$, $RSiO_{3/2}$, $R_3SiO_{1/2}$ und $SiO_{2/4}$ sein, wobei R einen einwertigen Rest darstellt. Die Menge der einzelnen Siloxaneinheiten ist dabei so bemessen, daß auf 100 Einheiten der Formel $R_2SiO$ bis 10 Mol-Einheiten der Formel $RSiO_{3/2}$, bis 1,5 Mol-Einheiten $R_3SiO_{1/2}$ und bis 3 Mol-Einheiten $SiO_{2/4}$ vorhanden sind. R kann dabei entweder ein einwertiger gesättigter Kohlenwasserstoffrest mit 1 bis 18 C-Atomen, der Phenylrest oder Alkoxy-Rest oder eine radikalisch leicht angreifbare Gruppe wie der Vinyl- oder der Mercaptopropylrest sein. Bevorzugt ist, daß mindestens 80 % aller Reste R Methyl sind; insbesondere bevorzugt sind Kombinationen aus Methyl und Ethyl oder Phenyl.

Bei der Weichkomponente kann es sich auch um ein mehrstufig aufgebautes Polymerisat handeln (sog. "Kern/Schale-Aufbau", "core/shell morphology"). Beispielsweise kann ein kautschukelastischer Kern (Glasübergangstemperatur $T_G$ <0°C) von einer "harten" Schale (Polymere mit $T_G$ >25°C) oder umgekehrt umhüllt sein. Weiterhin eignen sich auch Pfropfpolymerisate mit mehreren "weichen" und "harten" Stufen, wie etwa in der DE-OS 4 131 729 beschrieben.

Als Komponente E) können weitere, an sich bekannte thermoplastische Polymerisate in den erfindungsgemäßen Formmassen enthalten sein, soweit sie mit den übrigen Komponenten in den gewählten Mischungsgrenzen verträglich sind. Geeignet sind z.B. Polyamide, Polycarbonate, Polyester, Polyolefine, Pfropfcopolymere sowie Poly(meth)acrylate. Derartige Polymerisate E) können sowohl einzeln als auch in Form von Mischungen in den erfindungsgemäßen Formmassen enthalten sein. Ihr Anteil beträgt 0 bis 60 Gew.-% in den erfindungsgemäßen Formmassen und liegt vorzugsweise bei 0 bis 50 Gew.-%.

Geeignete Polyamide sind an sich bekannt. Bevorzugt werden ganz allgemein solche Polyamide eingesetzt, die einen aliphatisch teilkristallinen oder teilaromatischen sowie amorphen Aufbau besitzen. Gleichfalls sind die entsprechenden Blends einsetzbar. Derartige Produkte sind z.B. unter dem Handelsnamen Ultramid® (BASF AG) erhältlich.

Geeignete Polycarbonate sind ebenfalls hinlänglich bekannt. Deren Herstellung und Eigenschaften sind z.B. beschrieben im Kunststoff-Handbuch 3/1 "Technische Thermoplaste, Polycarbonate, Polyacetale, Polyester, Celluloseester", Hrsg. L. Bottenbruch, Hanser-Verlag, München, 1992, S. 117-299. Die Polycarbonate haben vorzugsweise ein Molekulargewicht (Gewichtsmittelwert $M_w$, bestimmt mittels Gelpermeationschromatographie in Tetrahydrofuran gegen Polystyrolstandards) im Bereich von 10 000 bis 60 000 g/mol. Sie sind z.B. entsprechend den Verfahren der DE-B-13 00 266 durch Grenzflächenpolykondensation oder gemäß dem Verfahren der DE-A-14 95 730 durch Umsetzung von Diphenylcarbonat mit Bisphenolen erhältlich. Bevorzugt werden aromatische Dihydroxyverbindungen eingesetzt, insbesondere 2,2-Di(4-hydroxyphenyl)propan (auch allgemein bekannt als Bisphenol A).

Geeignete Polyester sind ebenfalls an sich bekannt und in der Literatur beschrieben (Kunststoff-Handbuch 3/1 "Technische Thermoplaste, Polycarbonate, Polyacetale, Polyester, Celluloseester", Hrsg. L. Bottenbruch, Hanser-Verlag, München, 1992, S. 7 - 115). Sie leiten sich im allgemeinen von einer aromatischen Dicarbonsäure ab, wobei das aromatische Gerüst z.B. auch mit Halogen, wie Chlor oder Brom, oder mit geradkettigen oder verzweigten Alkylgruppen, bevorzugt $C_1$- bis $C_4$-, substituiert sein kann. Bevorzugte Dicarbonsäuren sind Naphthalindicarbonsäure, Terephthalsäure und Isophthalsäure oder Dicarbonsäuren, die in bestimmtem Umfang (bis zu 10 mol-%) durch aliphatische oder cycloaliphatische Dicarbonsäuren ersetzt sein können. Die Viskositätszahl der Polyester liegt im allgemeinen im Bereich von 60 bis 200 ml/g (gemessen in einer 0,5 gew.-%igen Lösung in einem Phenol/o-Dichlorbenzolgemisch (Gew.-Verh. 1:1 bei 25°C)).

Als Polyolefine sind ganz allgemein Polyethylen und Polypropylen sowie Copolymerisate auf der Basis von Ethylen oder Propylen, ggf. auch mit höheren $\alpha$-Olefinen geeignet. Entsprechende Produkte sind unter den Bezeichnungen Lupolen® bzw. Novolen® (BASF AG) erhältlich.

Im allgemeinen können verschiedenste Pfropfcopolymerisate verwendet werden, bevorzugt werden jedoch Pfropfcopolymerisate, deren Pfropfgrundlage aus einem kautschukelastischen Kern mit einer Glasübergangstemperatur von unter 10°C, bevorzugt unter 0°C, insbesondere -10°C besteht.

Dies sind z.B. Naturkautschuk, Synthesekautschuk auf der Basis konjugierter Diene oder Elastomere auf der Basis von $C_1$- bis $C_{18}$-Alkylestern der Acrylsäure, die auch weitere Comonomere enthalten können.

Bevorzugt kommen als Pfropfgrundlage Polybutadien oder Copolymerisate aus Polybutadien und Styrol in Betracht.

Weiterhin sind Pfropfgrundlagen bevorzugt, die aufgebaut sind aus

70 bis 99,9 Gew.-%, vorzugsweise von 90 bis 99 Gew.-% mindestens eines Alkylacrylates mit 1 bis 8 C-Atomen im Alkylrest, vorzugsweise n-Butylacrylat und/oder 2-Ethylhexylacrylat, insbesondere n-Butylacrylat als alleiniges Alkylacrylat,

0 bis 30 Gew.-%, insbesondere von 20 bis 30 Gew.-% eines weiteren copolymerisierbaren monoethylenisch ungesättigten Monomeren, wie Butadien, Isopren, Styrol, Acrylnitril, Methylmethacrylat und/oder Vinylmethylether und

0,1 bis 5 Gew.-%, vorzugsweise von 1 bis 4 Gew.-% eines copolymerisierbaren, polyfunktionellen, vorzugsweise bi- oder trifunktionellen, die Vernetzung bewirkenden Monomeren, wie Divinylbenzol, Diallylmaleat oder Dihydrodicyclopentadienylacrylat.

Die beschriebenen Pfropfgrundlagen werden vorzugsweise in an sich bekannter Weise mit einer Pfropfauflage aus Styrol oder substituierten Styrolen oder deren Mischungen und/oder Acrylnitril, Methacrylnitril, Acrylsäureestern oder Methacrylsäureestern oder deren Mischungen, bevorzugt aber Acrylnitril, versehen. Die erhaltenen Kern-Schale-Pfropfcopolymerisate werden bevorzugt in eine Copolymerhartmatrix auf der Basis von Styrol/Alkylstyrol und Acrylnitril und/oder Methacrylnitril eingelagert, wodurch sogenannte Acrylnitril-Butadien-Styrol (ABS)- bzw. Acrylsäureester-Styrol-Acrylnitril (ASA) -Pfropfcopolymerisate erhalten werden. Derartige Polymermaterialien sind unter den Marken Terluran® bzw. Luran®S (BASF AG) im Handel erhältlich.

Unter Polymethacrylate fallen insbesondere Polymethylmethacrylat (PMMA) sowie die Copolymere auf der Basis von Methylmethacrylat mit bis zu 40 Gew.-% an weiterem copolymerisierbaren Monomer. Derartige Polymermaterialien werden unter den Marken Lucryl® (BASF AG) oder Plexiglas® (Röhm GmbH) vertrieben. Gegebenenfalls können bei Kompatibilisierungsproblemen zwischen den Polyphenylenethern A) und Polymethacrylaten Haftvermittler eingesetzt werden.

Als Komponente F) können die erfindungsgemäßen Formmassen auch Zusatzstoffe und Verarbeitungshilfsmittel enthalten. Der Anteil dieser Zusätze beträgt im allgemeinen nicht mehr als 60, vorzugsweise nicht mehr als 50, und insbesondere nicht mehr als 30 Gew.-%.

Als Zusatzstoffe seien genannt Hitze- und Lichtstabilisatoren, Gleit- und Entformungsmittel, Färbemittel, wie Farbstoffe und Pigmente, in üblichen Mengen. Weitere Zusatzstoffe sind Verstärkungsmittel, wie Glasfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum und Kreide.

Des weiteren kommen Gleitmittel, wie Polyethylenwachs, als Zusatzstoffe in Betracht.

Ruße oder Titandioxid können beispielsweise als Pigmente verwendet werden.

Bei Verwendung von $TiO_2$ liegt die mittlere Teilchengröße in der Regel im Bereich von etwa 50 bis 400 nm, insbesondere von etwa 150 bis 240 nm. Technische Verwendung finden Rutile und Anatas, die gegebenenfalls mit Metalloxiden, z.B. Aluminiumoxiden, Siliciumoxiden, Oxiden des Zn oder Siloxanen, beschichtet sind.

Als Ruße sollen mikrokristalline, feinteilige Kohlenstoffe verstanden werden (vgl. Kunststofflexikon, 7. Auflage 1980).

Als geeignet seien die Ofenruße, Acetylenruße, Gasruße sowie die durch thermische Herstellung erhältlichen Thermalruße genannt.

Die Teilchengrößen liegen vorzugsweise im Bereich von etwa 0,01 bis 0,1 μm und die Oberflächen im Bereich von etwa $10^2$ bis $10^4$ m$^2$/g (BET/ASTM D 3037) bei DBP-Absorptionen von etwa $10^2$ bis $10^3$ ml/100 g (ASTM D 2414).

Die Herstellung der erfindungsgemäßen Formmassen erfolgt zweckmäßigerweise durch Mischen der Komponenten bei Temperaturen im Bereich von 250 bis 300°C in üblichen Mischvorrichtungen, wie Knetern, Banburry-Mischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Komponenten kann variiert werden, es können zwei oder gegebenenfalls mehrere Komponenten vorgemischt sein oder es können auch alle Komponenten gemeinsam gemischt werden.

Aus den erfindungsgemäßen Formmassen lassen sich z.B. durch Spritzguß oder Extrusion Formkörper herstellen, die flammwidrig sind und bei der Brandprüfung nach UL 94 nicht zum brennenden Abtropfen neigen. Sie können weiterhin zur Herstellung von Folien und Halbzeug im Tiefzieh- oder Blasverfahren verwendet werden.

Mit den erfindungsgemäßen thermoplastischen Formmassen gelingt eine V1-Klassifizierung gemäß der Prüfung nach UL 94. Brennendes Abtropfen tritt nur noch sehr eingeschränkt oder überhaupt nicht mehr auf. Verlängerte Brandzeiten sind ebenfalls nicht zu beobachten. Darüber hinaus verlieren die erfindungsgemäßen thermoplastischen Formmassen durch den Zusatz von Iminophosphoranen nicht die eingangs geschilderten vorteilhaften rheologischen und mechanischen Eigenschaften von Polyphenylenether/Polystyrol-Formmassen.

Beispiele:

Komponente A1 = Poly-2,6-dimethyl-1,4-phenylenether mit einem mittleren Molekulargewicht (Gewichtsmittel aus GPC gegen Polystyrol-Standard) von 40000 g/mol.

Komponente B

Beispiel 1

Synthese von N-$\alpha$-Pyridyl-iminotriphenylphosphoran

In einem 2 l-Vierhalskolben, versehen mit KPG-Rührer, Innenthermometer, Rückflußkühler und Tropftrichter wurden 188,6 g (0,72 mol) Triphenylphosphin, 56,4 g (0,6 mol)2-Aminopyridin, 600 ml Acetonitril und 180 ml Triethylamin vorgelegt. Die Mischung wurde unter Rühren auf 45°C Innentemperatur vorgewärmt, bevor mit dem Zutropfen von 92,4 g (0,6 mol) Tetrachlormethan begonnen wurde, wobei die Zugabegeschwindigkeit so geregelt wurde, daß die Temperatur nicht über 55°C anstieg. Nach beendeter Zugabe wurde noch mindestens zwei Stunden nachgerührt. Das aus der erkalteten Reaktionsmischung ausgeschiedene Salz wurde abgesaugt und mit Acetonitril nachgewaschen. Der sich aus dem eingeengten Filtrat ergebende Rückstand wurde in Isopropanol gelöst und das Produkt durch Zugabe von Wasser wieder ausgefällt.

Man erhielt insgesamt 167 g des gewünschten Produktes vom Schmelzpunkt 145 - 146°C. MS(CI): 355 (M$^+$ + 1).

Beispiel 2 (Komponente B1)

Umsetzung von Triphenylphosphin mit 2,6-Diaminopyridin
Führte man die Reaktion wie in Beispiel 1 beschrieben durch, verwendete jedoch 32,7 g 2,6-Diaminopyridin an Stelle von 56,4 g 2-Aminopyridin, so erhielt man 146,g des Bisiminophosphorans vom Schmelzpunkt 177 - 178°C. MS (ESI): 630 (M$^+$ + 1);
$^{31}$P-NMR (CDCl$_3$): 6.0 ppm.

Beispiel 3 (Komponente B2)

Umsetzung von Triphenylphosphin mit Acetoguanamin

a) Verfuhr man wie nach Beispiel 2, verwendete jedoch 37,5 g Acetoguanamin, so ergaben sich 162 g eines weissen Pulvers.

b) In einem 250 ml-Vierhalskolben, versehen mit Blattrührer, Rückflußkühler und Innentemperaturmessung wurden 126 g (0,053 mol) 14 %ige Triphenylphosphindichloridlösung (in Chlorbenzol) und 3 g (0,024 mol) Acetoguanamin (2,4-Diamino-6-methyl-s-triazin) vorgelegt. Das Reaktionsgemisch wurde 25 min unter Rückfluß gehalten, das beim Erkalten auf Raumtemperatur ausfallende Salz wurde abgesaugt, mit 15 ml Chlorbenzol und 50 ml Toluol gewaschen und an der Luft getrocknet. Das trockene Produkt wurde in einem 500 ml-Vierhalskolben, versehen mit Blattrührer, Rückflußkühler und Innentemperaturmessung, in 100 ml Isobutanol und 100 ml Wasser eingetragen. Zu der Suspension wurden 3,8 g einer 50 %igen wäßrigen Natronlaugelösung (0,048 mol) gegeben. Das in der Isobutanolfraktion vorliegende Zielprodukt wurde durch Entfernen des Isobutanols mittels Wasserdampfdestillation gewonnen. Der anfallende Feststoff wurde abgesaugt, mit 50 ml Wasser nachgewaschen und bei 60°C im Vakuum getrocknet. Man erhielt 13,4 g des gewünschten Produktes.

Schmelzpunkt 239 bis 243°C;
MS (FAB): 646 (M$^+$ + 1);
$^{13}$C-NMR (CDCl$_3$): 173.8, 171.3, 133.4, 131.6, 130.0, 128.9, 128.2, 25.3 ppm ;
$^{31}$P-NMR (CDCl$_3$): 17.5 ppm.

Beispiel 4 (Komponente B3)

Umsetzung von Triphenylphosphin mit p-Toluolsulfonsäureamid

a) In einem 500 ml-Vierhalskolben, versehen mit KPG-Rührer, Innenthermometer, Tropftrichter und Rückflußkühler wurden 65,5 g (0,125) mol Triphenylphosphin, 42,8 g (0,25 mol) p-Toluolsulfonsäureamid und 250 ml Tetrahydrofuran vorgelegt. Unter Kühlung mit einem Trockeneisbad auf -10°C wurde binnen 90 Minuten eine Lösung von 43.4 g (0,25 mol) Azodicarbonsäurediethylester in 50 ml THF zugetropft. Nach einer Nachrührzeit von 1 h bei 0°C und weiteren 4 h bei 20°C wurde durch Absaugen und Einengen im Vakuum aufgearbeitet. Umkristallisation in Ethanol lieferte 81,1 g des farblosen Produktes.

b) In einem 2 l-Vierhalskolben, versehen mit Blattrührer, Rückflußkühler und Innentemperaturmessung wurden 1164 g (0,49 mol) 14 %ige Triphenylphosphindichloridlösung (in Chlorbenzol) und 82 g (0,48 mol) p-Toluolsulfonsäureamid vorgelegt. Das Reaktionsgemisch wurde innerhalb von 1 h auf Rückflußtemperatur (125 bis 130°C) aufgeheizt und 2 h bei dieser Temperatur gehalten. Nach Abkuhlen auf 75°C wurden 500 ml Wasser zugesetzt. Einengen mittels Wasserdampfdestillation führte zum kristallinen Produkt, das nach Filtration, Waschen mit 2500 ml Wasser und Trocknen fur 16 h im Vakuum bei 75°C in einer Menge von 205,8 g erhalten wurde. Zur Reinigung wurde der Rückstand bei 35°C mit 350 ml Ethanol ausgerührt, filtriert und portionsweise mit 200 ml Ethanol nachgewaschen. Man erhielt 199,5 g eines kristallinen Produkts.

Schmelzpunkt 190 bis 191°C;
MS (EI): 430 (M$^+$);
$^{13}$C-NMR (CDCl$_3$). 143.6 (s), 140.4 (s), 133.1 (d), 132.8 (d), 128,7 (s), 128.6 (d), 127.3 (s), 125.7 (d), 21.2 (q) ppm;
$^{31}$-P-NMR (CDCl$_3$): 14.8 ppm.

Beispiel 5 (Komponente B4)

Herstellung von t-Butyl-iminophosphoran

a) Zu einer Lösung von Triphenylphosphindichlorid in Chlorbenzol gab man unter exothermer Reaktion eine Mischung von Triethylamin und t-Butylamin (insgesamt zwei Äquivalente an Base bezogen auf eingesetztes Triphenylphosphindichlorid). [Wahlweise können auch zwei Äquivalente an t-Butylamin eingesetzt werden.] Das salzartige Produkt fiel als in Chlorbenzol unlöslicher Rückstand an und wurde durch Filtration isoliert. Mit einer geeigneten starken Base ließ sich aus dem Rückstand das t-Butyl-iminophosphoran freisetzen.

b) In einem 2 l-Doppelmantelgefäß, versehen mit teflonummantelten Metallrührer, Rückflußkühler, Thermofühler zur Innentemperaturmessung und Tropftrichter wurden 1118,4 g (0,47 mol) 14 %ige Triphenylphosphindichloridlösung (in Chlorbenzol) vorgelegt. Hierzu gab man bei einer Innentemperatur von 2 bis 8°C innerhalb von 77 min eine Mischung aus 34,3 g (0,47 ml) t-Butylamin und 47,5 g (0,47 mol) Triethylamin. Es wurde für weitere 10 min nach Zulaufende unter Kühlung gerührt, anschließend wurde die Badtemperatur stufenweise auf 25°C angehoben und für 2 Stunden bei dieser Temperatur gerührt. Das salzartige Produkt fiel als in Chlorbenzol unlöslicher Rückstand an und wurde durch Filtration isoliert und mit 200 ml Chlorbenzol sowie portionsweise mit insgesamt 1 l Petrolether nachgewaschen. 231 g (0,46 mol) des trockenen Produktes wurden in einem 2 l-Doppelmantelgefäß, versehen mit Glasrührer, Rückflußkühler, Thermofühler zur Innentemperaturmessung sowie Tropftrichter in 1,1 l Methanol gelöst und innerhalb von 10 min mit 164 g (0,91 mol) einer 30 %igen Natriummethylatlösung in Methanol versetzt. Nach 30 minütigem Rühren wurde die Lösung, gleichfalls unter Rühren, in 5,5 l Wasser (10 l Becherglas) gegeben. Es wurde 10 min nachgerührt, der Niederschlag abfiltriert, mit Wasser gewaschen und im Vakuum getrocknet. Man erhielt 142,1 g eines farblosen Pulvers.

Schmelzpunkt 145 bis 147°C.
Komponente B5$^*$ = Resorcinoldiphosphat (Fyrolflex® RDP der Firma Akzo)

Beispiel 6

Synthese von N-α-Pyrazidyl-iminotriphenylphosphoran

In einem 250 ml-Vierhalskolben, versehen mit KPG-Rührer, Innenthermometer, Rückflußkühler und Tropftrichter wurden 33,1 g (0,126 mol) Triphenylphosphin, 10 g (0,105 mol) 2-Aminopyrazin, 100 ml Acetonitril und 30 ml Triethylamin vorgelegt. Die Mischung wurde unter Rühren auf 45°C Innentemperatur vorgewärmt. Sodann wurde mit dem Zutropfen von 16,2 g (0,105 mol) Tetrachlormethan begonnen. Die Zugabegeschwindigkeit wurde so geregelt, daß die Temperatur nicht über 55°C anstieg. Nach beendeter Zugabe wurde noch mindestens zwei Stunden nachgerührt. Das aus der erkalteten Reaktionsmischung ausgeschiedene Salz wurde abgesaugt und mit Acetonitril nachgewaschen. Der sich aus dem eingeengten Filtrat ergebende Rückstand wurde in Isopropanol gelöst und das Produkt durch Zugabe von Wasser wurde ausgefällt.
Man erhielt insgesamt 29,1 g des gewünschten Produktes vom Schmelzpunkt 176 - 177°C. MS (CI): 356 ($M^+$ + 1).

Beispiel 7

Synthese von N-α-Pyrimidyl-iminotriphenylphosphoran

Verfuhr man wie nach Beispiel 1, verwendete jedoch 57,0 g (0,6 mol) 2-Aminopyrimidin an Stelle von 2-Aminopyridin, so erhielt man 175,7 g der Zielverbindung vom Schmelzpunkt 153 - 155°C.
MS (CI): 356 ($M^+$ + 1);
$^{31}$P-NMR($CDCl_3$) : 15.7 ppm.

Beispiel 8

Umsetzung von Triphenylphosphin mit Benzoguanamin

Verfuhr man wie nach Beispiel 2, verwendete jedoch 56,1 g Benzoguanamin, so ergeben sich 150 g eines weissen Pulvers vom Schmelzpunkt 256 - 257°C.
MS (EI): 706 ($M^+$ - 1);
$^{31}$-P-NMR ($CDCl_3$): 17,2 ppm.

Beispiel 9

Synthese von N-Cyano-iminotriphenylphosphoran

In einem 2 l-Vierhalskolben, versehen mit KPG-Rührer, Innenthermometer, Rückflußkühler und Tropftrichter wurden 331 g (1,26 mol) Triphenylphosphin, 88,2 g (1,05 mol) Cyanguanidin [alternativ läßt sich auch Harnstoff einsetzen], 1 l Acetonitril und 300 ml Triethylamin vorgelegt. Die Mischung wurde unter Rühren auf 45°C Innentemperatur vorgewärmt, bevor mit dem Zutropfen von 102 g (1,05 mol) Tetrachlormethan begonnen wurde. Die Zugabegeschwindigkeit wurde so geregelt, daß die Temperatur nicht über 55°C anstieg. Nach beendeter Zugabe wurde noch mindestens zwei Stunden nachgerührt. Das aus der erkalteten Reaktionsmischung ausgeschiedene Salz wurde abgesaugt und mit wenig Acetonitril nachgewaschen. Der Rückstand wurde mit Wasser aufgerührt, anschließend abgesaugt und in Isopropanol in der Wärme gelöst. Das Produkt fiel bei Zugabe von Wasser wieder aus. Man erhielt 119 g des Produktes vom Schmelzpunkt 195 - 196°C.
MS (FAB): 303 ($M^+$ + 1);
$^{13}$C-NMR ($CDCl_3$) : 133.4, 132.5, 132.4, 129.3, 129.1, 127.3, 126.2, 118.7ppm.$^{31}$-P-NMR ($CDCl_3$) : 25.1 ppm;
Analyse für $C_{19}$-$H_{15}N_2$P: ber. C 75.49, H 5.00, N 9.27; gef. C 75.2, H 5.1, N 9.3.

Beispiel 10

Herstellung des Bis-iminophosphorans aus 1,8-Diaminomenthan

Man verfuhr analog Beispiel 5 unter Verwendung von Triethylamin als Hilfsbase. Der aus Chlorbenzol isolierte Rückstand wurde mit einer starken Base behandelt.

Schmelzpunkt 200 - 205°C

Komponente C1 = Schlagzähes Polystyrol (Polydispersität = 2,4) mit 9 Gew.-% Polybutadien und Zellteilchenmorphologie, mittlere Teilchengröße der Weichkomponente = 1,9 µm. Die Viskositätszahl (VZ) der Hartmatrix beträgt 80 ml/g (0,5%ig in Toluol bei 23°C)

Komponente C2 = Schlagzähes Polystyrol (Polydispersität = 2,3) mit 11 Gew.-% Polybutadien und Zellteilchenmorphologie, mittlere Teilchengröße der Weichkomponente = 3,5 µm. Die VZ der Hartmatrix beträgt 80 ml/g (0,5%ig in Toluol bei 23°C)

Komponente D1 = Hydriertes Styrol-Butadien-Styrol-Dreiblockcopolymer (Blockkautschuk Kraton® G 1650 der Firma Shell)

Komponente FI = Ruß (Black Pearls® der Firma Cabot) als 15%iger Batch in Polystyrol mit einer Polydispersität von 2,4 und VZ = 80 ml/g (0,5%ig in Toluol bei 23°C)

Die Komponenten A bis F wurden in einem Zweiwellenextruder (ZSK 30 der Firma Werner & Pfleiderer) bei 280°C als Strang ausgetragen, abgekühlt und granuliert.

Das getrocknete Granulat wurde bei 280°C zu Rundscheiben (Dicke 2 mm, Durchmesser 60 mm), Flachstäben (127 * 12,7 * 1,6 mm) und Normkleinstäben verarbeitet und untersucht.

Die Schädigungsarbeit "W" wurde nach DIN 53 443 bestimmt. Hierzu wurden Rundscheiben mit einer Geschwindigkeit von 4,6 m/s durchstoßen. Aus dem Kraft-Weg-Diagramm wurde die Schädigungsarbeit bestimmt. Angegeben ist der Mittelwert aus 5 Einzelmessungen.

Die Wärmeformbeständigkeit wurde an Normkleinstäben nach DIN 53460 mittels der Vicat B - Erweichungstemperatur bestimmt.

Die Fließfähigkeit (Volumen-Fließ-Index) wurde nach DIN 53 735, bei einer Auflagekraft von 21,6 kp und einer Temperatur von 250°C bestimmt.

Um die Flammfestigkeiten zu messen, wurden die Flachstäbe nach UL-94 beflammt. Die Einstufung eines flammgeschützten Thermoplasten in die Brandklasse VO erfolgt, wenn folgende Kriterien erfüllt sind: Bei einem Satz von 5 Proben der Abmessungen 127 * 12,7 * 1,6 mm dürfen alle Proben nach zweimaliger Beflammung von 10 sec Dauer mit einer offenen Flamme (Höhe 19 mm) nicht länger als 10 sec nachbrennen. Die Summe der Nachbrennzeiten bei 10 Beflammungen von 5 Proben darf nicht größer als 50 sec sein. Es darf kein brennendes Abtropfen, vollständiges Abbrennen oder Nachglühen von länger als 30 sec erfolgen. Die Einstufung V1 erfordert, daß die Nachbrennzeiten nicht länger als 30 sec sind und daß die Summe der Nachbrennzeiten von 10 Beflammungen von 5 Proben nicht größer als 250 sec ist. Das Nachglühen darf nicht länger als 60 sec dauern. Die übrigen Kriterien sind identisch mit den oben erwähnten. Eine Einstufung in die Brandklasse V2 erfolgt dann, wenn es bei Erfüllung der übrigen Kriterien der V1-Einstufung zu brennendem Abtropfen kommt.

Tabelle

| Beispiel Komp. [Gew.-%] | 11 | 12 | 13 | 14 | 15* | 16 | 17q* |
|---|---|---|---|---|---|---|---|
| A1 | 40 | 40 | 40 | 40 | 40 | 40 | 40 |
| B1 | | | | 11 | | 11 | |
| B2 | 11 | | | | | | |
| B3 | | | 11 | | | | |
| B4 | | 11 | | | | | |
| B5* | | | | | 11 | | 11 |
| C1 | 42,7 | 42,7 | 42,7 | 42,7 | 42,7 | 39,7 | 39,7 |
| C2 | | | | | | 3 | 3 |
| D1 | 3 | 3 | 3 | 3 | 3 | 3 | 3 |
| F1 | 3,3 | 3,3 | 3,3 | 3,3 | 3,3 | 3,3 | 3,3 |
| W[Nm] | 41 | 40 | 32 | 35 | 34 | 37 | 38 |
| Vicat [°C] | 111 | 112 | 115 | 113 | 106 | 112 | 105 |
| MVI [ml/10 min] | 120 | 120 | 115 | 111 | 89 | 116 | 93 |
| UL 94 | V1 | V1 | V1 | V1 | VI | V1 | V1 |

* Vergleichsbeispiel

**Patentansprüche**

1. Flammwidrige thermoplastische Formmassen, enthaltend

    A) 5 - 98 Gew.-% eines oder mehrerer Polyarylenether,

    B) 2 - 50 Gew.-% Flammschutzmittel, enthaltend Iminophosphorane,

    C) 0 - 93 Gew.-% vinylaromatische Polymerverbindungen,

    D) 0 - 50 Gew.-% Schlägzähmodifier,

    E) 0 - 60 Gew.-% an weiteren thermoplastischen Polymerisaten sowie

    F) 0 - 60 Gew.-% an weiteren Zusätzen.

2. Flammwidrige thermoplastische Formmassen nach Anspruch 1, dadurch gekennzeichnet, daß sie die

    Komponente A) in einer Menge von 13,5 - 87 Gew.-%,
    Komponente B) in einer Menge von 4 - 20 Gew.-%,
    Komponente C) in einer Menge von 8,5 - 82 Gew.-%,
    Komponente D) in einer Menge von 0,5 - 30 Gew.-%,
    Komponente E) in einer Menge von 0 - 50 Gew.-% und die
    Komponente F) in einer Menge von 0 - 50 Gew.-%

    enthalten.

3. Flammwidrige thermoplastische Formmassen nach den Ansprüchen 1 bis 2, dadurch gekennzeichnet, daß als Komponente A) ein oder mehrere Polyphenylenether eingesetzt werden.

4. Flammwidrige thermoplastische Formmassen nach den Ansprüchen 1 bis 3, dadurch gekennzeichnet, daß als Komponente A) ein Poly-(2,6-dialkyl-1,4-phenylenether) eingesetzt wird.

5. Flammwidrige thermoplastische Formmassen nach den Ansprüchen 1 bis 4, dadurch gekennzeichnet, daß die Polyphenylenether A) ein mittleres Molekularwicht $M_w$ im Bereich von 25000 bis 50000 g/mol aufweisen.

6. Flammwidrige thermoplastische Formmassen nach den Ansprüchen 1 bis 5, dadurch gekennzeichnet, daß als Komponente C) schlagzähes Polystyrol mit 9 bis 11 Gew.-% an Polybutadien eingesetzt wird.

7. Flammwidrige thermoplastische Formmassen nach den Ansprüchen 1 bis 6, dadurch gekennzeichnet, daß als Iminophosphorane gemäß B) Verbindungen der Formel X-Z (I) oder der Formel Y-$(Z)_n$ (II) oder Verbindungen der Formel X-Z (I) und Y- $(Z)_n$ (II) eingesetzt werden, worin

    X   Wasserstoff; ein geradkettiger oder verzweiger $C_1$- bis $C_{20}$-Alkylrest; Aryl, bevorzugt nicht substituierte oder aromatisch-aliphatisch substituierte $C_6$- bis $C_{20}$-Aryle; Heteroaryl; eine aliphatische oder aromatische Sulfonsäuregruppe; eine Cyangruppe; Trialkylsilyl; eine $P(O)R_2$- oder $P(S)R_2$-Gruppe oder eine Amingruppe bedeutet,

    Y   einen n-wertigen organischen Rest, der $C_1$- bis $C_{100}$-, bevorzugt $C_2$- bis $C_{20}$- geradkettige oder verzweigte Alkyleneinheiten, Dendrimere, aliphatische Carbocyclen, wobei die Ringe aus 3 bis 20 Kohlenstoffatomen bestehen, umfaßt, wobei die offenkettigen und cyclischen Alkyleneinheiten im Alkylteil einmal oder mehrmals, in beliebiger Kombination, mit Stickstoff-, C(O)-R-, Ether-, Thioether-, $SO_2$-Resten, aliphatischen -, aromatischen Heterocyclen oder einer Cyan- oder Isocyanatgruppe substituiert sein können; Aryl; Heteroaryl, bevorzugt Heteroaromaten mit 2,6-Disubstitution; eine aromatische Mono- oder Polysulfonsäuregruppe; Amidderivate der Phosphorig-, Phosphor- oder Thiophosphorsäure; Amidderivate der Monoalkyl- und Monoarylphosphonsäure, der Monoalkyl- und Monoarylthiophosphonsäure sowie gemischt-substituierte Verbindungen darstellt;

Z einen Rest der Formel $R^1R^2R^3P=N-$ darstellt, wobei $R^1$, $R^2$ und $R^3$, unabhängig voneinander, $C_1$- bis $C_{20}$-Alkyl; $C_6$- bis $C_{20}$-Aryl; alkylsubstituiertes Aryl oder Heteroaryl darstellen und

n ganze Zahlen im Bereich von 2 bis 1000, bevorzugt im Bereich von 2 bis 10 bezeichnet.

8. Verwendung der flammwidrigen thermoplastischen Formmassen gemäß den Ansprüchen 1 bis 7 zur Herstellung von Fasern, Folien und Formkörpern.

9. Fasern, Folien und Formkörper, erhältlich aus den flammwidrigen thermoplastischen Formmassen gemäß den Ansprüchen 1 bis 7.

**Claims**

1. A flame-retardant thermoplastic molding composition comprising

    A) from 5 to 98 % by weight of one or more polyarylene ethers,

    B) from 2 to 50 % by weight of flame retardants, comprising iminophosphoranes,

    C) from 0 to 93 % by weight of vinylaromatic polymeric compounds

    D) from 0 to 50 % by weight of impact modifiers,

    E) from 0 to 60 % by weight of other thermoplastic polymers and

    F) from 0 to 60 % by weight of other additives.

2. A flame-retardant thermoplastic molding composition as claimed in claim 1, which comprises

    component A) in an amount of from 13.5 to 87 % by weight,

    component B) in an amount of from 4 to 20 % by weight,

    component C) in an amount of from 8.5 to 82 % by weight,

    component D) in an amount of from 0.5 to 30 % by weight,

    component E) in an amount of from 0 to 50 % by weight and

    component F) in an amount of from 0 to 50 % by weight.

3. A flame-retardant thermoplastic molding composition as claimed in claim 1 or 2, wherein one or more polyphenylene ethers are employed as component A).

4. A flame-retardant thermoplastic molding composition as claimed in any of claims 1 to 3, wherein a poly(2,6-dialkyl-1,4-phenylene) ether is employed as component A).

5. A flame-retardant thermoplastic molding composition as claimed in any of claims 1 to 4, wherein the polyphenylene ether A) has a mean molecular weight $M_w$ in the range from 25,000 to 50,000 g/mol.

6. A flame-retardant thermoplastic molding composition as claimed in any of claims 1 to 5, wherein impact-modified polystyrene with from 9 to 11 % by weight of polybutadiene is employed as component C).

7. A flame-retardant thermoplastic molding composition as claimed in any of claims 1 to 6, wherein the iminophosphoranes of B) employed are compounds of the formula X-Z (I) or of the formula $Y-(Z)_n$ (II) or compounds of the formula X-Z (I) and $Y-(Z)_n$ (II), where

X   is hydrogen; straight-chain or branched $C_1$-$C_{20}$-alkyl; aryl, preferably unsubstituted $C_6$-$C_{20}$-aryl or $C_6$-$C_{20}$-aryl with aromatic aliphatic substitution; heteroaryl; an aliphatic or aromatic sulfonic acid group; cyano; trialkylsilyl; $P(O)R_2$- or $P(S)R_2$- or amino,

Y   is an n-valent organic radical which includes straight-chain or branched $C_1$-$C_{100}$-alkylene units, preferably $C_2$-$C_{20}$-alkylene units, dendrimers, aliphatic carbocycle in which the rings consist of from 3 to 20 carbon atoms, where the open-chain and cyclic alkylene units in the alkyl moiety may be substituted one or more times in any desired combination with groups connected via nitrogen, or C(O)-R-, ether, thioether, $SO_2$ groups, aliphatic or aromatic heterocycles or a cyano or isocyanato group; aryl, heteroaryl, preferably 2,6-disubstituted heteroaromatics; an aromatic mono- or polysulfonic acid group; amide derivatives of phosphorous, phosphoric or thiophosphoric acid; amide derivatives of monoalkyl- or monoarylphosphonic acid, or of monoalkyl- or monoarylthiophosphonic acid, or compounds with mixed substitution;

Z   is $R^1R^2R^3P=N$-, where $R^1$, $R^2$ and $R^3$, independently of one another, are $C_1$-$C_{20}$-alkyl, $C_6$-$C_{20}$-aryl; or heteroaryl and

n   is an integer from 2 to 1000, preferably from 2 to 10.

**8.** The use of a flame-retardant thermoplastic molding composition as claimed in any of claims 1 to 7 for producing fibers, films or shaped articles.

**9.** A fiber, a film or a shaped article, obtainable from a flame-retardant thermoplastic molding composition as claimed in any of claims 1 to 7.

**Revendications**

**1.** Masses de moulage thermoplastiques ignifuges, contenant

A) 5 - 98% en poids d'un ou de plusieurs éthers de polyarylène,
B) 2 - 50% en poids d'agents ignifuges, contenant des iminophosphoranes,
C) 0 - 93% en poids de composés polymères vinylaromatiques,
D) 0 - 50% en poids de modificateurs de résistance aux chocs,
E) 0 - 60% en poids d'autres polymères thermoplastiques, ainsi que
F) 0 - 60% en poids d'autres additifs.

**2.** Masses de moulage thermoplastiques ignifuges suivant la revendication 1, caractérisées en ce qu'elles contiennent

le composant A) en une quantité de 13,5 - 87% en poids,
le composant B) en une quantité de 4 - 20% en poids,
le composant C) en une quantité de 8,5 - 82% en poids,
le composant D) en une quantité de 0,5 - 30% en poids,
le composant E) en une quantité de 0 - 50% en poids, et
le composant F) en une quantité de 0 - 50% en poids.

**3.** Masses de moulage thermoplastiques ignifuges suivant l'une des revendications 1 et 2, caractérisées en ce que, comme composant A), on met en oeuvre un ou plusieurs éthers de polyphénylène.

**4.** Masses de moulage thermoplastiques ignifuges suivant l'une des revendications 1 à 3, caractérisées en ce que, comme composant A), on met en oeuvre un éther de poly-(2,6-dialkyl-1,4-phénylène).

**5.** Masses de moulage thermoplastiques ignifuges suivant l'une des revendications 1 à 4, caractérisées en ce que les éthers de polyphénylène A) présentent un poids moléculaire moyen $M_w$ de l'ordre de 25000 à 50000 g/mole.

**6.** Masses de moulage thermoplastiques ignifuges suivant l'une des revendications 1 à 5, caractérisées en ce que, comme composant C), on met en oeuvre du polystyrène résistant aux chocs comportant 9 à 11% en poids de polybutadiène.

7. Masses de moulage thermoplastiques ignifuges suivant l'une des revendications 1 à 6, caractérisées en ce que, comme iminophosphoranes selon B), on met en oeuvre des composés de la formule X-Z (I) ou de la formule Y-$(Z)_n$ (II) ou des composés des formules X-Z (I) et Y-$(Z)_n$ (II), dans lesquelles

X représente de l'hydrogène, un radical alkyle en $C_1$-$C_{20}$ linéaire ou ramifié, un groupe aryle, de préférence des aryles en $C_6$-$C_{20}$ non substitués ou substitués de manière aromatique-aliphatique, un groupe hétéroaryle, un groupe acide sulfonique aliphatique ou aromatique, un groupe cyano, un groupe trialkylsilyle, un groupe P(O)$R_2$- ou P(S)$R_2$- ou un groupe amino,

Y représente un radical organique à n valences, qui comporte des unités alkylène linéaires ou ramifiées en $C_1$-$C_{100}$, de préférence en $C_2$-$C_{20}$, des dendrimères, des carbocycles aliphatiques, où les noyaux sont constitués de 3 à 20 atomes de carbone, les unités alkylène à chaîne ouverte et cycliques pouvant être substituées dans la partie alkyle à une ou plusieurs reprises, en combinaison quelconque, par de l'azote, des radicaux C(O)-R-, éther, thioéther, $SO_2$-, des hétérocycles aliphatiques, aromatiques, ou un groupe cyano ou isocyanate, un groupe aryle, un groupe hétéroaryle, de préférence des substances hétéroaromatiques avec une disubstitution en 2,6, un groupe acide monosulfonique ou polysulfonique aromatique, des dérivés amide de l'acide phosphoreux, phosphorique ou thiophoshorique, des dérivés amide de l'acide monoalkylphosphonique et monoarylphosphonique, de l'acide monoalkylthiophosphonique et monoarylthiophosphonique, ainsi que des composés substitués de manière mixte,

Z représente un radical de la formule $R^1R^2R^3P=N-$, où $R^1$, $R^2$ et $R^3$ représentent, indépendamment l'un de l'autre, un groupe alkyle en $C_1$-$C_{20}$, un groupe aryle en $C_6$-$C_{20}$, un groupe arylalkylsubstitué ou un groupe hétéroaryle, et

n représente des nombres entiers de l'ordre de 2 à 1000, de préférence de l'ordre de 2 à 10.

8. Utilisation des masses de moulage thermoplastiques ignifuges suivant l'une des revendications 1 à 7, pour la fabrication de fibres, de feuilles et de corps façonnés.

9. Fibres, feuilles et corps façonnés, que l'on peut obtenir à partir des masses de moulage thermoplastiques ignifuges suivant l'une des revendications 1 à 7.